Europäisches Patentamt

European Patent Office

Office européen des brevets

(19)

(11) Publication number: **0 008 541**
**A2**

(12) # EUROPEAN PATENT APPLICATION

(21) Application number: **79301735.1**

(22) Date of filing: **23.08.79**

(51) Int. Cl.³: **H 01 M 2/12**
**F 16 K 17/14**

(30) Priority: **28.08.78 US 937505**

(43) Date of publication of application:
**05.03.80 Bulletin 80/5**

(84) Designated Contracting States:
**DE FR GB**

(71) Applicant: **ESB INTERNATIONAL CORPORATION**
**2625 Concord Pike**
**Wilmington Delaware 19803(US)**

(72) Inventor: **Levy, Isaac Isidore**
**Route 1 Box 277D**
**Cambridge WI 53523(US)**

(74) Representative: **Greenstreet, Cyril Henry et al,**
**Thames House Millbank**
**London SW1P 4QF(GB)**

(54) **Primary cells and seals therefor.**

(57) A resilient plastic sealing disc (21) for a sealed primary cell has a recess the floor of which forms a thin diaphragm (22). Grooves (25) in the diaphragm form lines of weakness along which the diaphragm is fractured by excess gas pressure in the cell to form flaps, hinged at the periphery (24) of the recess, which open to relieve the gas pressure.

_Fig. 2_

EP 0 008 541 A2

Croydon Printing Company Ltd.

'Primary cells and seals therefor'

This invention relates to sealed primary electric cells.

Sealed primary cells of both the Leclanché and alkaline types commonly comprise a generally tubular envelope closed at its open end by a sealing disc through which an electrode extends. The envelope contains the electrolyte, separators and other internal constituents of the cell, the electrode being immersed in the electrolyte within the cell and connected at its outer end to a terminal of the cell.

To relieve excess pressure that may be developed in the cell, for example by the evolution of gas if a charging current is inadvertently passed through the cell, sealed cells are commonly provided with a venting mechanism arranged to open before the cell bursts.

While in principle the provision of a pressure relief vent is straightforward, the small size and relatively low price of the cells present difficulties in its design.

Four types of venting systems have been evolved for use in sealed cells. One type comprises a springloaded valve that is temporarily opened against the pressure of the spring by excess gas pressure in the cell.

In the second type, a venting passageway is covered by a resilient member, such as a plastic washer, that can be temporarily deformed by excess pressure in the cell so as to force it away from the venting opening and allow the gas to escape.

A third approach, described in more detail in U.S. specification No. 4 075 398, is to fix a plug in an opening in the sealing disc arranged to be blown out by excess gas pressure in the cell.

The fourth approach is to provide in the sealing disc a weakened section or diaphragm that is ruptured by excess pressure within the cell. The diaphragm may simply be stretched to bursting point by the internal pressure, or it may be urged outwardly against a pointed anvil or the

0008541

like which punctures it and allows the pent-up gases to escape.

Sealing discs incorporating a thinner area that serves as a frangible diaphragm or bursting disc can readily be made from a plastics material by injection moulding, but they have the disadvantage that they cannot be resealed, so that after venting the contents of the cell can leak. It is also difficult to injection mould the harder types of plastics material to form a diaphragm thin enough to burst at a low enough excess pressure, so the choice of plastics material is limited.

The present invention provides a diaphragm-type venting system that can be resealed, at least after venting moderate excess gas pressure.

According to the invention the sealing disc in a sealed primary cell of the type described is formed of a resilient plastics material resistant to attack by the electrolyte and has a recess the bottom of which constitutes a diaphragm having one or more grooves in its surface forming a line or lines of weakness defining on fracture one or more flaps hinged at the periphery of the recess. At a predetermined pressure, the diaphragm breaks at the grooves, forming flaps, the pressure forces the flaps outward and the pressure is released. After the pressure is released, the flaps return substantially to their original position and hence prevent leakage of the contents of the cell.

Advantageously the diaphragm has at least two straight grooves that extend inwards from the periphery of the recess and intersect, though it is preferred that the ends of the or each groove do not abut the wall of the recess. In a preferred embodiment the recess is circular and the diaphragm has two or more radial grooves in it.

Preferably the cross-section of the or each groove is V-shaped, the width at the widest part being from 1 to 4 times, most preferably from 1.5 to 2.5 times, the thickness of the diaphragm. The groove depth is preferably from one-third to two-thirds of the thickness of the diaphragm.

The disc may be formed of any substantially rigid plastics material, e.g. a thermosetting or thermoplastic resin, that is resilient and it resistant to the electrolyte used in the cell. Suitable materials include polysulphone (e.g. Udel (Trade mark) P1700), polyphenylene oxide (e.g. Noryl (Trade mark)), polyamides (such as nylon 1001L), polypropylene, polyethylene, polystyrene, and acrylonitrile-butadiene-styrene (ABS). These materials may be filled with glass. Preferably the material is ABS, polyamide, polyphenylene oxide, or polypropylene. The most preferred materials are polyphenylene oxide and polypropylene.

The amount of pressure required to rupture the diaphragm at the groove will depend on the nature of the material of the disc and the thickness of the diaphragm. By appropriate selection of these variables, venting pressures in the range 350 - 4800 kPa (kilopascals) may be achieved, but preferably the diaphragm ruptures at pressures in the range 700 - 2400 kPa, and most preferably in the range 1700 - 2400 kPa.

When the material of the disc is polyphenylene oxide, the thickness of the diaphragm should be from 0.25 to 0.5 mm, and is preferably 0.37 mm.

The use of a sealing disc having a grooved diaphragm has the advantage that the diaphragm may be thick enough over most of its area for the disc to be readily formed by injection moulding in a single step, even from relatively hard plastics material.

A sealed cell according to the invention will now be described by way of example with reference to the accompanying drawings, in which:

Figure 1 is a section through a sealed primary cell of the alkaline type;

Figure 2 is a plane view of sealing disc having a diaphragm with cruciform grooves; and

Figures 3 to 5 show diagrammatically other arrangements of grooves in such a diaphragm.

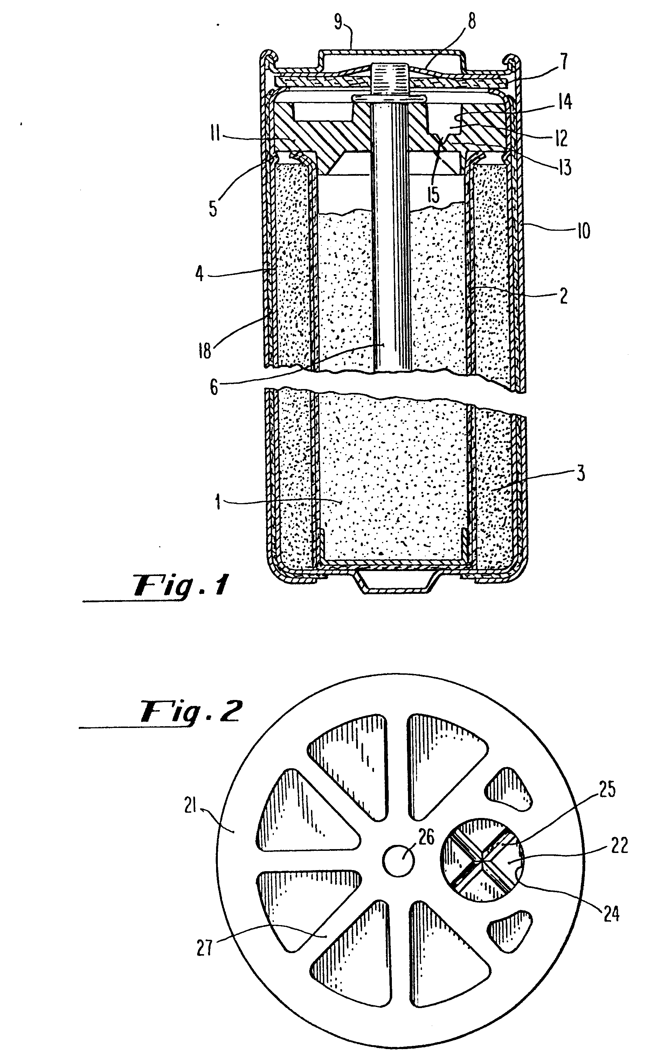

The cell shown in Figure 1 comprises a deep-drawn steel tube 4 forming an envelope open at one end within which is placed a centrally located gelled electrolyte mix 1 surrounded by a separator 2. Disposed concentrically outside the separator is a second mix 3, commonly formed of manganese dioxide or the like. The envelope is conductive, and serves to form the positive electrode of the cell, while a centrally-disposed electrode 6 termed a "nail" forms the inner portion of the negative electrode.

The mouth of the cell is closed by a generally planar disc 11 which seats upon indentations 5 that serve to locate the disc. The upper end of the nail 6 terminates in a flange seated across the upper surface of the disc 11. Placed over the flange is an annular paper washer 7 that constitutes an insulator for separating the cell envelope from other, conductive members that constitute the outer can assembly. Finally, surmounting the washer 7 is a metal strip 8 having an aperture in the middle, the edges of the aperture being upset to form resilient teeth which, upon being forced over the head of the nail 6, grip the head tightly to hold the assembled components in place and further form a conductive path from the head of the nail 6 to an outer cap 9. The outer cap then forms the negative terminal of the cell.

An outer covering 10 is disposed about the lateral area of the envelope and is spaced therefrom by an insulating sleeve 18 which may, for example, be of paper. The upper end of the covering 10 is crimped over the periphery of the outer cap 9, and the bottom of the covering 10 is crimped about the planar bottom of the envelope 4, to fasten the cell elements firmly together.

In order to afford pressure relief to the interior of the cell, the disc 11 is provided with a recess 12 of which the perimeter is defined by the wall 14. The bottom of the recess forms a diaphragm 13 that has at least one groove 15.

A preferred form of the disc is shown in Figure 2. The disc 21 has a centrally-located aperture 26 for the "nail" 6 and radial ribs 27 that serve to increase the radial strength of the disc. In the space between two radial ribs and between the aperture 26 and the periphery of the disc is located a recess of which the perimeter is defined by a wall 24. The base of the recess forms a diaphragm 22 in which are formed V-shaped tapered radial grooves 25 arranged in the form of a cross.

When excess pressure is generated within the cell, e.g. by outgassing on the electrode owing to rapid charging of the cell, the pressure will cause the diaphragm to break at the radial grooves to form flaps hinged at the periphery of the recess, and the pressure will be released. If the excess pressure is only small, the resilience of the material of the disc will return these flaps to their original position, reforming the diaphragm. The break between the flaps will then be insufficient to allow leakage of the cell contents, but if excess pressure again develops a flap will again open and allow the gas to escape.

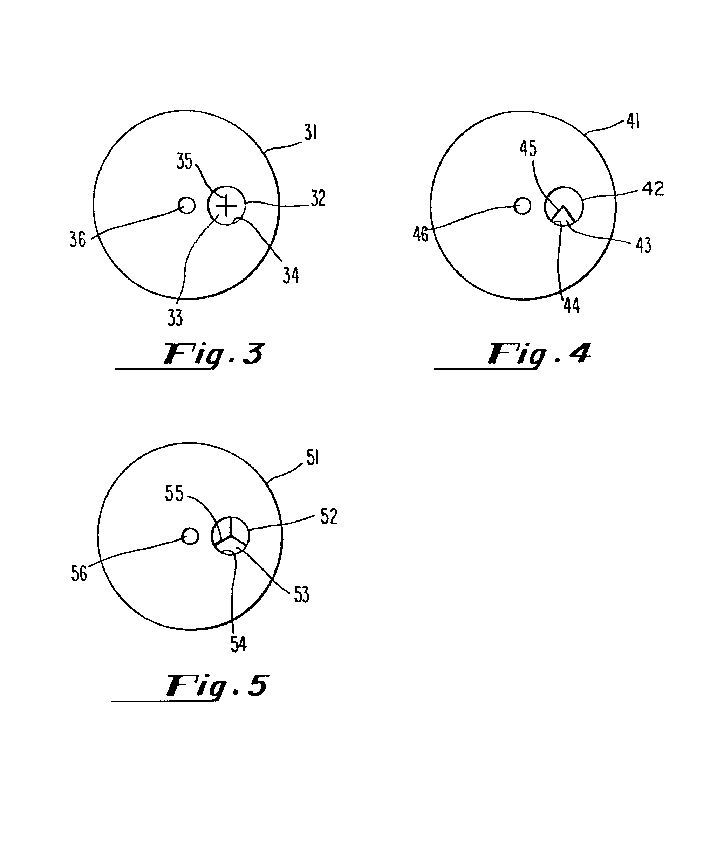

Other arrangements of grooves are shown in Figures 3 to 5 of the drawings. In these figures, the discs 31, 41 and 51 have centrally-located apertures 36, 46 and 56 respectively for a "nail" electrode. Recesses 32, 42 and 52 are located between the apertures 36, 46 and 56 respectively and the periphery of the disc. The bottoms of the recesses define diaphragms 33, 43 and 53 respectively in which grooves 35, 45 and 55 are formed. Each arrangement of grooves defines one or more flaps hinged at the periphery of the diaphragm.

Some examples will now be given.

### EXAMPLE 1

A plastic sealing disc for an alkaline cell was injection moulded from polyphenylene oxide to the form shown in Figure 2.   The recess had a diameter of 5.1 mm, the diaphragm was 0.38 mm thick, and the radial V-shaped grooves were 4.6 mm long and 0.25 mm deep, and tapered from a width of 0.75 mm at the top.   Each disc was given two successive tests to determine its venting pressure.   The following table shows that while the pressure needed for venting was lower in the second test than in the first, the pressure required was still high enough to prevent leakage.

### TABLE 1

| Disc | Venting pressure (kPa) | |
|------|------------|-------------|
|      | First Test | Second Test |
| 1    | 2140       | 1860        |
| 2    | 1720       | 1450        |
| 3    | 2340       | 2070        |
| 4    | 2070       | 1860        |
| 5    | 2410       | 1860        |
| 6    | 1860       | 1720        |
| 7    | 1930       | 2270        |
| 8    | 2550       | 2270        |
| 9    | 2270       | 2070        |
| 10   | 2820       | 2550        |
| 11   | 2690       | 1930        |
| 12   | 1520       | 1450        |
| 13   | 2820       | 2550        |
| 14   | 1720       | 1520        |
| 15   | 1860       | 1720        |
| 16   | 1930       | 1790        |
| 17   | 2340       | 1930        |

### EXAMPLE 2

In this Example three further discs identical to those tested in Example 1 were repeatedly vented.   The results are set forth in Table 2, in which test 1 shows the initial venting pressure and tests 2 to 11 the pressures required to re-vent the cell.   It will be seen that the pressures required for reventing remain substantially constant.

000854

## TABLE 2

### Venting pressure (kPa)

| Test | Disc 1 | Disc 2 | Disc 3 |
|------|--------|--------|--------|
| 1 | 1890 | 1790 | 1790 |
| 2 | 1410 | 860 | 1650 |
| 3 | 1410 | 860 | 1650 |
| 4 | 1780 | 790 | 1650 |
| 5 | 1780 | 760 | 1650 |
| 6 | 1780 | 760 | 1650 |
| 7 | 1780 | 760 | 1580 |
| 8 | 1780 | 760 | 1580 |
| 9 | 1780 | 760 | 1580 |
| 10 | 1780 | 760 | 1580 |
| 11 | 1780 | 760 | 1580 |

Claims

1.     A sealed primary cell comprising a generally tubular envelope (4) containing electrolyte (1) and closed at its open end by a sealing disc (11) through which extends an electrode (6) that is immersed in the electrolyte within the cell and connected at its outer end to a terminal (9) of the cell, characterised in that the sealing disc (11) is formed of a resilient plastics material resistant to attack by the electrolyte and having a recess (12) the bottom of which constitutes a diaphragm (13) having one or more grooves (15) in its surface forming a line or lines of weakness defining on fracture one or more flaps hinged at the periphery of the recess.

2.     A cell according to claim 1, characterised in that the diaphragm has at least two straight grooves that extend inwards from the periphery of the recess and intersect.

3.     A cell according to claim 1 or claim 2 characterised in that the ends of the groove or grooves do not abut the wall of the recess.

4.     A cell according to any preceding claim in which the recess is circular and has at least two radial grooves.

5.     A cell according to claim 4 in which the grooves are arranged in the form of a cross.

6.     A cell according to any preceding claim characterised in that the groove depth is from one-third to two-thirds of the thickness of the diaphragm and the groove width at its widest point is from 1 to 4 times the thickness of the diaphragm.

7.     A cell according to any preceding claim characterised in that the disc is formed of acrylonitrile-butadiene-styrene, polyamide, polyphenylene oxide or polypropylene.

Fig.1

Fig.2

**Fig.3**

**Fig.4**

**Fig.5**